# EUROPEAN PATENT SPECIFICATION

(11) **EP 1 695 294 B1**
(45) Date of publication and mention of the grant of the patent: **10.03.2010**
(21) Application number: 04801459.1
(22) Date of filing: 03.12.2004
(51) Int. Cl.: G06T 15/00

(54) **COMPUTER GRAPHICS PROCESSOR AND METHOD FOR RENDERING 3-D SCENES ON A 3-D IMAGE DISPLAY SCREEN**
COMPUTER-GRAPHIK-PROZESSOR UND VERFAHREN ZUM WIEDERGEBEN VON 3D-SZENEN AUF EINEM 3D-BILDANZEIGE-SCHIRM
PROCESSEUR INFORMATIQUE GRAPHIQUE ET PROCEDE DE RENDU DES SCENES 3D SUR UN ECRAN D'AFFICHAGE GRAPHIQUE 3D

(30) Priority: 09.12.2003 EP 03104608
(43) Date of publication of application: 30.08.2006
(73) Proprietor: NXP B.V., 5656 AG Eindhoven (NL)
(72) Inventor: BARENBRUG, Bart, G., B., NL-5656 AA Eindhoven (NL); VAN GEEST, Bartolomeus, W., D., NL-5656 AA Eindhoven (NL); MEINDS, Kornelis, NL-5656 AA Eindhoven (NL)
(74) Representative: Schouten, Marcus Maria
(86) International application number: PCT/IB2004/052659
(87) International publication number: WO 2005/057501

(56) References cited:
- EP-A- 1 128 328
- US-A- 6 023 263
- BAOQUAN CHEN ET AL: "Forward image mapping" VISUALIZATION '99. PROCEEDINGS SAN FRANCISCO, CA, USA 24-29 OCT. 1999, PISCATAWAY, NJ, USA,IEEE, US, 24 October 1999 (1999-10-24), pages 89-514, XP010364950 ISBN: 0-7803-5897-X
- LINDHOLM E ET AL: "A USER-PROGRAMMABLE VERTEX ENGINE" COMPUTER GRAPHICS. SIGGRAPH 2001. CONFERENCE PROCEEDINGS. LOS ANGELES, CA, AUG. 12 - 17, 2001, COMPUTER GRAPHICS PROCEEDINGS. SIGGRAPH, NEW YORK, NY : ACM, US, 12 August 2001 (2001-08-12), pages 149-158, XP001049883 ISBN: 1-58113-374-X

## Description

The invention relates to a computer graphics processor and a method of rendering N views of 3D scenes.

### BACKGROUND OF THE INVENTION

Recently, there has been a lot of interest in providing 3-D images and 3D scenes on 3-D image display screens. It is believed that 3-D imaging will be, after color imaging, the next great innovation in imaging. The information (data) needed for displaying the image is rendered by a renderer comprising an input for a 3-D model and an input for a viewpoint. Basically, a three dimensional impression can be created by using stereo pairs (two different images directed at the two eyes of the viewer), holographic techniques, or multiple planes in the displays.

There are several ways to produce stereo images. The images may be time multiplexed on a 2D display, but this requires that the viewers wear glasses with e.g. LCD shutters. When the stereo images are displayed at the same time, the images can be directed to the appropriate eye by using a head mounted display, or by using polarized glasses (the images are then produced with orthogonal polarized light). The glasses worn by the observer effectively route the views to each eye. Shutters or polarizer's in the glasses are synchronized to the frame rate to control the routing. To prevent flicker, the frame rate must be doubled or the resolution halved with respect to the two dimensional equivalent image. A disadvantage with such as system is that the two images produce only a limited "look around" capability. Furthermore, glasses have to be worn to produce any effect. This is unpleasant for those observers who are not familiar with wearing glasses and a potential problem for those already wearing glasses, since the additional pair of glasses do not always fit.

Instead of near the viewers eyes, the two stereo images can also be split at the display screen by means of a splitting screen such as a parallax barrier, as e.g. shown in US 5,969,850. The view of the display screen are auto-stereoscopic in the sense that no special glasses are required to view the 3D image, they often work only for one viewer at a fixed position in space. However, the viewing zone is very narrow. Outside the viewing zone, the observer sees multiple images or a stereo inversion, leading to a very unpleasant view. In practice this means that for many application, for instance in living rooms, the viewing zone is so small that the viewer has to be seated at one particular spot to be able to see a 3D image.

Accordingly, there is a trend towards systems with display devices that are able to provide N-views, i.e. a large number of views on the display screen. Such devices are able to provide a 3D image on a display screen that is visible over a relatively large viewing angle, for several viewers.

In order to display the images, especially in 3-D gaming, a renderer is used. A renderer has to render the data for the images. For simple stereo displays, i.e. where the number of view points N = 2, the renderer has to render data for two images, while for more complex 3D, e.g. auto-stereoscopic displays, the number of views increases substantially, currently running to N - 10, and for future 3D displays it is expected that N ∼ 100, requiring the renderer to supply ever more views and thus ever more data. The renderer may be part of the display device itself, or may be a stand-alone device for providing image information to be supplied to the image device as an input for addressing means of or for the display device. It is in this respect of prime importance that not just for many views information must be generated but also the quality of the image is preferably substantially equal for each viewpoint.

Current rendering techniques use renders which render image information, i.e. data, for each separate view, based on a 3-D model and the viewpoint of said separate view. Although such methods are useful for 3-D imaging with N=2, such an implementation for an ever increasing number of view points, in order to increase the field of view and allow the image to be seen from many different view points, requires a large number of view points with substantially equal image quality, with a high speed and high degree of details must be rendered.

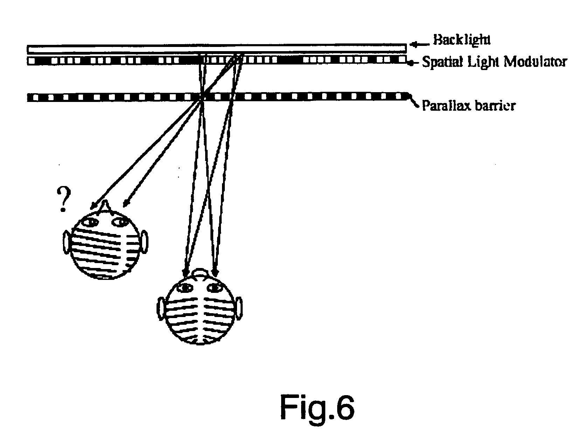

Fig. 6 illustrates the problem of a basic stereoscopic device. A viewer which is not seated within the right viewing zone is confused. The viewing zone is very narrow. Outside the viewing zone, the observer sees multiple images or a stereo inversion, leading to a very unpleasant view. In practice this means that for many application, for instance in living rooms, the viewing zone is so small that the viewer has to be seated at one particular spot only to be able to see anything.

The parallax display is a type of multi-view display that shows a fixed set of different perspective views (images) of a 3D scene for different viewing positions allowing multiple simultaneous viewers.

The number of views (N) that a parallax display can show, determines the 3D-image quality and the overall depth range that can be represented. The image quality increases when neighboring views are more similar. This yields smooth (realistic) perspective transitions for the viewers' head movements. Furthermore, two neighboring views are most of the time slightly overlapping. It means that 'double contouring' or (ghosting) increases if the view similarity decreases. However, similarity of neighboring views limits the amount of depth these views can contribute since more depth requires more disparity (less similarity) between views.

Accordingly, the requirement of a large number of perspective views (N) calls for a cost effective means to generate them.

A solution is to generate all views from their 3D descriptions. This enables viewpoints from very different angles. An expensive variant of generating all multiple views is to use separate graphics pipelines (possibly even located in different PCs or other devices). This requires synchronization between the graphics pipelines, and duplication of all model and texture data over the pipelines.

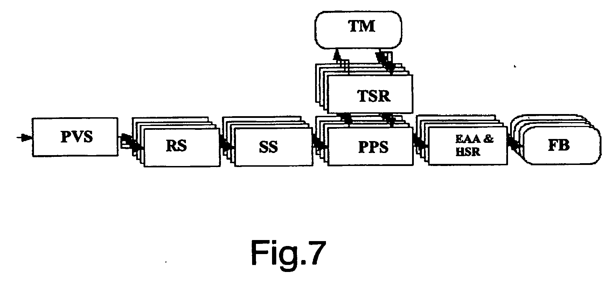

However, one variant is to duplicate only part of the rendering pipeline. A traditional inverse mapping rendering pipeline is shown in Fig. 7. Fig. 7 shows the architecture of the last stages of an inverse mapping rendering pipeline featuring programmable vertex and pixel shading of the pixels visited. A programmable pixel shader PPS can use attributes available at each pixel location to compute the local surface color. When texture data is needed, a texture space resampler TSR is used to obtain a texture sample given the texture coordinates from a texture memory TM. These texture coordinates are generated by the pixel shader PPS based on the interpolated coordinates received from the rasteriser SS and any results from previous texture fetches (so-called dependent texturing) and/or calculations. After the surface color for a pixel has been determined by the PPS, the resulting pixel fragment is sent onwards to the Edge Anti-Aliasing and Hidden Surface Removal (EAA & HSR) unit. Usually, this unit uses a Z-buffer for hidden surface removal and multi-sampling (with the associated sub-sample buffer and down sample logic) for edge anti-aliasing. Down sampling is applied when all primitives have been rendered using a (usually box) prefilter to combine sub-samples to colors at the final pixel resolution.

The vertex shader PVS can modify and setup data for the pixel shader PPS for each vertex of a primitive that is to be rendered. The data provided by the vertex shader to the rasteriser setup RS usually includes attributes like diffuse and/or specular color, texture coordinates, (homogeneous) screen coordinates, and sometimes extra data like surface normals or other data required for the shading process. These attributes are offered to the screen-space rasteriser SS which uses a scan line algorithm to traverse the pixels which lie within the projection of the primitive an the screen, by selecting the screen coordinates from the vertex attributes as driving variables for the rasterisation process.

In such a pipeline, the rasteriser traverses the projection of a primitive in the scene (such as a triangle) on the screen. This projection is different for every view. So the rasteriser SS (including setup RS) and everything behind it in the pipeline need to be duplicated for each view. Accordingly, the rasterizer setup RS, the screen space rasterizer SS, the texture space resampler TSR, PPS & TSR the Edge Anti-Aliasing and Hidden Surface Removal EAA & HSR unit and the frame buffer FB is duplicated for each view. This is expensive in terms of hardware (much duplication), memory bandwidth (texture data is fetched independently for all pipeline duplicates) and processing requirements (the pixel shading calculations are duplicated and performed for each view).

US patent application 6,023,263 describes an autostereoscopic image display driver apparatus comprising of two renderers and related post-processing for generation of a number of additional views. It is stated that separate 3D renderers per eye viewpoint yield better results, but for more than two views the system is very expensive. To reduce cost only two renderers are used for the central view based on the assumption that the main viewer of such multiple view display will be in the center of the display, typically involved in some interactive role, the main viewer will see the two central views only. Other viewers, typically in a more passive role, may be positioned off center. The views other than the two central views are generated in post-processing stages wherein respective pixel values are generated by applying a horizontal shift to pixel values generated by the adjacent post-processing stage toward the center. The main viewer has the best seat while viewers to the side suffer some degradation whilst still obtaining a 3D view.

### SUMMARY OF THE INVENTION

It is an object of the invention to provide a system and a method which enables the rendering of N images without the need of excessive computational power but with substantially equal image quality.

This object is solved by a computer graphics processor according to claim 1, a method of rendering N views of 3D images according to claim 9, and a computer program product according to claim 14.

Therefore, a computer graphics processor having a renderer for rendering N views of 3D images is provided. Said renderer comprises a rasterizer SS for transversing a surface grid over a surface of primitives of said 3D images for all N views. Furthermore, said renderer comprises a shader means PPS for determining a color from the output of the rasteriser SS and forwarding a shaded color sample along with its screen coordinates to N screen space resamplers SSR each for resampling the shaded color sample determined by said shader means PPS according to one of the N views.

This implementation is much more efficient, since the surface traversal, texture fetching and shading computations are only performed once for the N different views. The resulting shaded colors are reused for all views. Additionally, the ability to traverse any grid over the surface of the primitive provides more rendering freedom.

According to an aspect of the invention, said computer graphics processor furthermore comprises a texture memory TM for storing texture maps. Said surface grid is derived from a texture map being associated with said primitive and being stored in said texture memory TM. The usage of grid associated to a texture map as surface grid is advantageous, since obtaining texture samples on a texture grid does not require resampling.

According to a further aspect of the invention, a grid associated to one of the texture maps stored in the texture memory TM is chosen as surface grid, if a) said texture map is addressed independently, b) said texture map is based on a 2D texture, and c) the texture coordinates at the vertices do not make up a degenerate primitive.

According to still a further aspect of the invention, the texture map with the largest area in texture space is chosen, if more than one texture maps stored in said texture memory TM fulfill said three requirements a)-c). This texture is the one with potentially the most detail and highest frequencies, which are best to be avoided in the texture space resampling process for this texture, since this process can give rise to unneeded blur and aliasing.

According to a further aspect of the invention, said computer graphics processor further comprises a means for addressing a display screen. Said renderer has an input for a 3D model and an input for at least one viewpoint for rendering image information for supplying to the addressing means. The renderer comprises an initial part 70 having an input for the 3-D model and for a main view point for rendering objects in the form of a main view point Z-stack 91, 94 having stack layers S1, S2, S3 with color information and Z-values. Moreover, the renderer comprises a Z-stack constructor in which, from the main view point Z-stack (91,94) generated by the initial stage, Z-stacks 97 for additional viewpoints are constructed, and a further image information occlusion semantics stage for generating image information 79 from the z-stacks 97.

Accordingly, only a few reasonably far apart views can be generated by the N screen space resamplers while few z-stacks are used to generate intermediate nearby views. Therefore, more than one main viewpoint may be present, which can each be generated by its own SSR.

The invention also relates to a method of rendering N views of 3D images. A surface grid over a surface of primitives of said 3D images is transversed for all N views. A color of the output of the rasteriser SS is generated and a shaded color sample is forwarded along with its screen coordinates. The shaded color sample determined by said shader means PPS is resampled for each of the N views.

The invention is based on the idea to perform the surface traversal, texture fetching and shading computations only once. The resulting shaded colors are then reused for all N views.

These and other aspects of the invention are apparent from and will be elucidated with reference to the embodiments described hereinafter.

### BRIEF DESCRIPTION OF THE DRAWINGS

In the drawings:
Fig. 1 shows a forward mapping pipeline for multi-view rendering according to a first embodiment,
Fig. 2 illustrates schematically a render pipe for a display device and a method according to a second embodiment,
Fig. 3 illustrates a detail of a render pipe for a display device and method of Fig. 2,
Fig. 4 illustrates details of a render pipe and method according to Fig. 2,
Fig. 5 illustrates further details of a method according to Fig. 2,
Fig. 6 illustrates the problem encountered with a basic parallax barrier display, and
Fig. 7 shows an inverse mapping pipeline for multi-view rendering.

The Figs. are not drawn to scale. Generally, identical components are denoted by the same reference numerals in the figs.

### DETAILED DESCRIPTION OF PREFERRED EMBODIMENTS

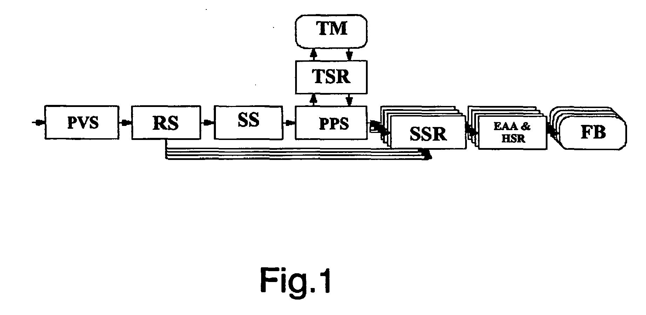

Fig. 1 shows an illustration of a forward mapping pipeline for multi-view rendering according to a first embodiment of the invention, which is the preferred embodiment. The rendering pipeline, and in particular its backend, comprises a programmable vertex shader PVS, a rasterizer setup unit RS, a surface space rasterizer SS, a texture memory TM, a texture space resampler TSR, a programmable pixel shader PPS, screen space resampler SSR, edge anti-aliasing unit EAA, hidden surface removal unit HSR and frame buffer FB.

First of all, the operation of the rendering pipeline will be described for a single view. The hybrid rendering pipeline architecture according to the invention is based on a combination of a inverse mapping pixel shading architecture and a forward mapping pipeline.

The programmable vertex shader PVS (e.g. as described in Erick Lindholm, Mark J. Kilgard, and Henry Moreton, A user-programmable vertex engine. In Proceedings Siggraph 2001, pages 149 - 158, August 2001) is adapted to modify and setup data for the programmable pixel shader PPS for each vertex of a primitive that is to be rendered. The data provided by the programmable vertex shader PVS to the rasteriser SS (for interpolation) usually includes attributes like diffuse and/or secular color, texture coordinates, (homogeneous) screen coordinates, and sometimes extra data like surface normal or other data required for the shading process.

The edge anti-aliasing unit EAA and the hidden surface removal unit HSR uses a Z-buffer for hidden surface removal and multi-sampling (with the associated sub-sample buffer and downscale logic) for edge anti-aliasing.

In the forward texture mapping architecture, texture samples are only available on the common screen pixel grid after the screen space resampler stage SSR. Also, a rasteriser can only traverse one grid at a time, so when rasterisation is taking place on a texture grid as in the forward mapping architecture and multi-texturing is enabled, the rasteriser has to select one texture out of many, and traverse the primitive and the associated grid. Multiple textures can be handled in a multi-pass fashion, so that they can be combined after they are resampled to the screen pixel grid. But that congests the fragment buffer in the EAA & HSR unit. It also precludes advanced features such as dependent texturing, or texture modes which are of an inverse nature, such as environment-mapped bump mapping (where the bump map information at each grid position determines where the environment map is indexed, possibly resulting in a one-to-many forward mapping from environment map to the primitive surface and the screen). According to the invention it is made sure that the screen space resampler SSR can map texture samples as if there was only one texture map associated with the primitive, in order to avoid these problems. To this end, shading of the surface color should be performed before the screen space resampling process.

The surface space rasteriser SS traverses the primitive over a "surface grid", i.e. over a grid in a coordinate system that provides a 2D parameterization of the surface of the primitive. The grid associated with a texture map provides such a surface grid, and is preferably used as surface grid (since obtaining texture samples an a texture grid does not require resampling). But in case of absence of texture maps, or when for example textures are 1D or 3D, another grid may be chosen. Attributes can be linearly interpolated over this grid, except (as in the case of forward texture mapping) for the perspectively mapped screen coordinates associated with each grid position. The surface space rasteriser SS interpolates attributes (including secondary texture coordinates) to the positions on this grid. The pixel shader PPS then operates on the attributes on grid positions in this surface grid and if there are any secondary textures associated with the primitive, it uses inverse mapping with standard texture space resamplers TSR to obtain colors from these textures. If the surface grid was selected from a texture map, fetching texels for this "primary" texture stage can be performed by the 4D mipmap reconstruction process from the forward mapping pipeline. This process is a form of axis-aligned anisotropic filtering, and anisotropic filtering is often available in standard texture space resamplers. The fetched texture samples and other attributes can be used by the pixel shader program to compute the surface color for the current grid position. Once the sample on the surface grid has been shaded, the screen space resampler SSR is used to splat the color to the screen pixels, where an EAA & HSR unit can combine contributions from different primitives.

The surface space rasteriser SS will contain an extra first pipeline stage (next to the regular setup and traversal stages) in which the surface grid is determined. This is done before the regular rasteriser setup.

The surface grid can be derived from one of the texture maps, so that this texture map does not have to be resampled (apart from 4D mipmapping) by the texture space rasteriser TSR. Accordingly, the grid setup stage can examine the texture maps stored in the texture memory TM which are associated with the primitive. For a texture map to be eligible to provide the surface grid, it has to fulfill three requirements. First, it must not be addressed dependently. Second, it has to be a 2D texture (1D and 3D textures are not suitable for traversing a 2D surface). Third, the texture coordinates at the vertices should not make up a degenerate primitive (where for example all the texture coordinates line up, yielding in effect a 1D texture).

If more than one textures are eligible, the grid setup stage selects the texture with the largest area in texture space: this is the texture with potentially the most detail and highest frequencies (which are best to be avoided in the texture space resampling process for this texture, since this process can give rise to unneeded blur and aliasing).

If there is no eligible texture available (in case of a simple Gouraud shaded primitive for example), a dummy grid over the surface of the primitive can be chosen for the rasteriser to traverse, by assigning dummy "texture coordinates" to each vertex. This dummy grid is then traversed by the rasteriser as if it were a texture grid (except that texture fetching for these coordinates is disabled). An advantage is that the resulting linear interpolation over the surface provides for perspective correct Gouraud shading, For more information please refer to, Baoquan Chen, Frank Dachille, and Arie Kaufman, "Forward image mapping" In Proceedings of IEEE Visualization'99, pages 89 - 96, October 1999. Assigning the x and y screen coordinates of each vertex as dummy texture coordinates is an alternative option. Note that this choice does not mean that the rasteriser traverses screen pixels, since the homogeneous w for each vertex is still taken into account when mapping a 'texel' to the screen. Another option (for planar surfaces such as triangles) is rotating the 3D vertex coordinates in eye space, such that the normal of the rotated surface aligns with the eye space z-axis, and then selecting the rotated eye space x and y coordinates as dummy grid coordinates for each vertex.

The ability to traverse any grid over the surface of the primitive provides a lot of freedom. This freedom could be used for example to avoid any bottleneck and shear problems which might be associated with the mapping of a particular texture grid to the screen. It could be used to traverse non-planar primitives (such as traversing a Bezier patch via the 2D grid determined by its surface parameterization, and using the forward mapping to directly splat the surface colors to the screen). It could also be used to rasteriser in the direction of the motion of the primitive so that a 1D filter can be applied along the rasterisation direction to efficiently implement motion blur.

The programmable "pixel" shader PPS and texture space resampler TSR (of which there may be one or more, for serial or parallel fetching of texture samples, if several textures are present) correspond to those in a traditional pipeline. The pixel shader PPS receives a set of (interpolated) attributes, including texture and screen coordinates, for one location. The texture coordinates, along with the shading program, determine where to index the texture maps via the texture space resampler TSR. The shader can also modify texture coordinates before sending them to the texture space resampler TSR to implement dependent texturing, exactly in the same way as in a traditional pipeline.

The programmable shader PPS passes the shaded color on to the screen space resampler SSR, along with the associated screen coordinates. These in general are not integer, but this is similar to how a pixel shader in a traditional pixel shader pipeline might receive sub-pixel screen positions when performing super-sampling.

Accordingly, the shaded color is the result of computations for one location, and does not depend on the grid traversed by the rasteriser SS. This means that existing shader programs will not have to be modified to run on the architecture according to the invention. There are advantages and disadvantages to performing the programmable shading in surface space. Next to the high quality anti-aliasing enabled by the forward mapping, a main advantage is a separation of concerns when it comes to the perspective mapping. The texture space resampler TSR now does not have to deal with the perspective mapping to the screen. Most of the time it will be used to perform an affine transformation from texture grid to another. Standard bi-linear/tri-linear probe based texture space resamplers can better approximate the filter footprints required for such an affined mapping than the more general shaped footprints required for perspective mapping, so the quality from this resampling process will be higher.

Only the screen space resampler SSR has to deal with the perspective resampling, and it is only applied to shaded samples on the surface grid once. A disadvantage is that more samples are shaded than in a traditional pixel shading pipeline, since we have roughly twice as many surface samples as final pixels. This is due to mipmapping maintaining a minification factor between I and 2 in each direction (so we have roughly 1.5x1.5 surface samples per pixel). The high-quality anti-aliasing will however make sure that sub-pixel details still contribute to the final image, thereby further improving image quality.

Another disadvantage can be that secondary textures are now resampled twice (once by the texture space resampler TSR and again by the screen space resampler SSR), which might introduce extra blurriness. This is why preferably the texture map with the highest detail is selected as primary texture, to ensure that the finest details are only resampled once. The secondary textures will have a smaller minification (or even magnification, as is usually the case with for example light maps) for which some extra blur is not very noticeable. The screen space resampler SSR also enables the use for high quality sharpness enhancement filters, which can also help with maintaining a sharp image.

The shaded color sample resulting from the pixel shading process is forwarded to the screen space resampler SSR along with its screen coordinates. The screen space resampler SSR resamples these color samples, (located generally at non-integer pixel positions) to the integer pixel positions needed for display. When rendering larger primitives or using a wide prefilter, a two-pass approach using 1D filters is more efficient than directly using a 2D filter kernel. Also, the 1D resamplers can be constructed such that no renormalization is required to avoid DC ripple Two-pass filters do require extra setup to alleviate for example the bottleneck and shear problems. The alternative is to use 2D resample kernels to perform the splatting.

In order to enable multi-view rendering only parts of the rendering pipeline are duplicated to render N different views. The selection of the parts to be duplicated will be described now in more detail.

As mentioned above, the surface space rasteriser SS traverses a grid over the surface of the primitive which is (largely) independent of the view on that surface and the pixel shader PPS determines colors for the surface transversed by the rasterizer SS. Accordingly, since the surface grid over the surface of the primitive is independent of the view on the surface, the surface traversal and shading computations do not need to be duplicated. Merely the screen space resampler SSR mapping the computed surface colors to the particular view, followed by the Edge Anti-Aliasing and Hidden Surface Removal (EAA & HSR) unit and the frame buffer FB need to be duplicated for each view, in order to render the view correctly.

Since the rasteriser setup also performs setup calculations for the screen space resampler (for the perspective mapping and backface culling), parts of the rasteriser setup need to be duplicated as well. In particular, the part of the rasteriser setup which initializes the variables used to perform the mapping to screen space are duplicated to set up the mapping for each view, and any backface culling algorithms need to be modified to only cull a primitive when it is not visible in any of the views (probably based on the two extremes).

Such a duplication is in particular advantageous, since it is much more efficient, as the surface traversal, texture fetching and shading computations are only performed once. The resulting shaded colors are reused for all views.

However, this will only work for those shading computations that are independent of the viewpoint (which is the case for a large class of shading computations). If not, the viewpoint for the center view can be used as an approximation. Shading can be performed for the center view, so that off-center views constitute an approximation.

Another consequence of rendering for multiple views is that the rasteriser needs to traverse the surface of the primitive in a resolution high enough for all views. In other words the highest resolution required by any of the views determines the resolution for the rasteriser. Accordingly, the rasterisation and shading costs are slightly higher than for rendering only one view, though much less than for separate rasterisation and shading for each view.

This solution can be combined with the known warping solution. Given one view and a depth-map for that view, neighboring views can be generated through warping techniques. This is very efficient, since the scene is only rendered once, but introduces artifacts which become more pronounced when the angle between the original view and the generated view becomes larger. In other words, the pipeline can be used to generate a limited number of views that cover all of the required viewing angle. Warping is then used to generate the intermediate views from the closest (one or two) of those rendered views.

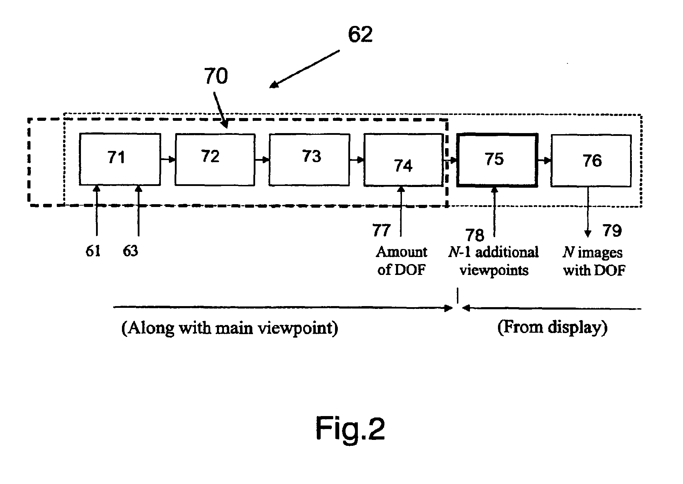

Fig. 2 illustrates a renderer (rendering pipe) 62 for a display device according to a second embodiment of the invention. The renderer 62 comprises a first part 70 for generating a Z-stack for a main viewpoint. This part comprises in this example an input 63 for the main viewpoint and an input 61 for the 3-D model. All geometries (shapes and forms of the objects) are transformed in geometry transformer 71 in accordance with the main viewpoint, the data are pixelized in pixelizer 72, i.e. all objects are transformed into pixels having an X,Y, Z, color (RGB) and possible also an α (opacity or transparency) value, and texture is added in texturizer 73. For the main viewpoint DOF (depth of Field) is added in DOF renderer 74. This is done for the data relating to the main viewpoint. So this is done only once for the main view point regardless of the number N-1 of additional viewpoints.

Thereafter the data (in the form of a Z-stack as will be explained below) for the main viewpoint is used as a basis in 3-D rendering stage 75, which has an input for data relating to the remaining N-1 additional viewpoints, and renders as an output N-1 Z-stacks for the N-1 additional viewpoints. In the occlusion semantics stage 76 the data in the N-1 additional view point z-stacks (together with the data in the Z-stack for the main viewpoint) are converted by means of Z-tracing into N frame buffers for N images from N different viewpoints. The computational requirements are relatively small since the first part of the processing which usually requires the largest amount of computational power (up to and including step 74) is done for the main viewpoint only. The resulting main viewpoint Z-stack (with DOF in this example) is the basis for all the other viewpoints.

The method and the system in accordance with a second embodiment of the invention enable efficient computation of N high-quality views, while existing methods based on frame/Z buffers provide only low-quality views, and while existing methods based on generating N views completely independent are not efficient.

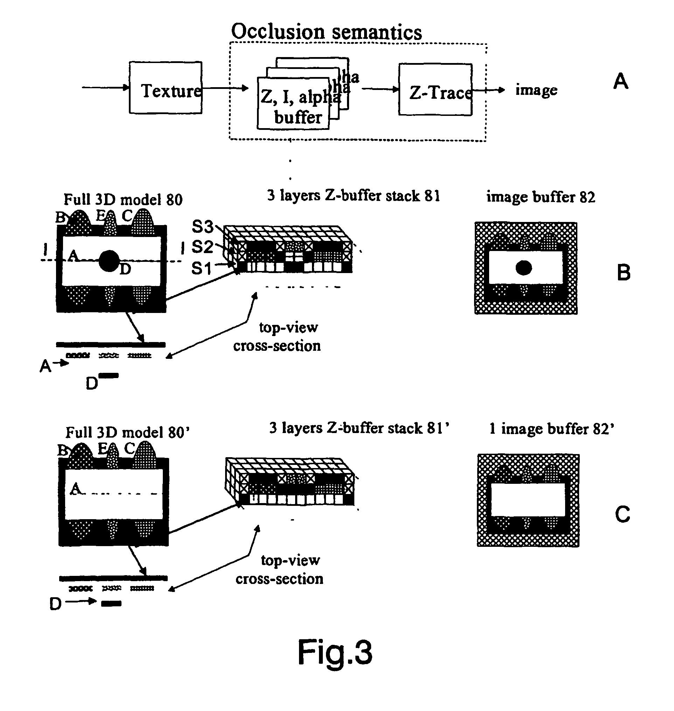

Figure 3 illustrates further the construction of the Z-stack, and the frame buffer for the different view points. The 3D model 80 comprises all information i.e. all objects and their mutual orientation. From the full 3-D model a 3 layer Z-stack 81 for the main view point is produced. This is done by a z-stack constructor schematically indicated in figure 3 which constructs a layered structure of (in this example) three sequential buffers comprising elements, wherein for each element (in this example) a Z, I (which stands for color), alpha (which stands for the opaqueness factor α) value is stored. Basically the first stack of the z-stack comprises the RGB (color information) and z-coordinate (and possibly also the alpha information, and possibly also further information) of all elements that are first seen from the view point. Thus the first layer of the z-stack comprises those objects and parts of objects that are first seen, i.e. the elements which are closest to the view point. In this example thus, the first layer S1 of the z-stack along the central line I-I comprises parts of object D, some parts of object A, and the outer fringes of object F, the second layer S2, along the same line, comprises parts of objects B and C, parts of object F, and parts of object A (the parts behind object D), the third layer comprises parts of object F (those parts behind objects B and C) and object E. It is to be noted that one and the same object may form part of several layers in the z-stack, due to the fact that as seen from the main viewpoint it is the first, second or third object to be seen. Having constructed the Z-stack a frame buffer may be constructed which basically, if the objects displayed in the first stack are all opaque, comprises the data of the first stack S1 of the z-stack. If the objects have a transparency (i.e. the alpha number is less than I, wherein the value for α ranges from 0 (opaque) to 1 (fully transparent)), then the image buffer comprises a combination of data from the respective layers S1 to S3. The data from the image buffer 82 are sent to the 3D display either directly or after further processing. In part B of the figure a 3-D model 80 is shown which ultimately leads to a frame buffer 82 which still comprises at least some data on all of the different objects A to E which constitute the original 3-D model. Starting from the frame buffer 82 it is, to some extent, possible to generate images for different views, be it that the shapes of the B, C, E objects behind object A have to be guessed on basis of those parts of the objects B, C, E that are visible in the frame buffer. It is, however, not always possible.

To illustrate this part C of figure 3 differs only from the situation as depicted in the part B of figure 3 in that the object D is now placed behind object A. The z-stack 81' reflects this change in that the elements depicting the object D do not longer form part of the first layer S1, but of layer S2. The image buffer 82' does no longer comprise any trace of object D, object D is simply is no longer present in the frame buffer 82'. Based on the image (or frame) buffer 82' for the main viewpoint, one could generate images for differing viewpoints, these images, however, cannot comprise the object D, for the simple reason that there no information (elements) on the object D present in the image buffer 82'. Even if, on the basis of previous images, it could be deduced that such an object should be, or most likely will be, present, the actual position and/or shape of the object would have to be guessed. However, from a different view point the object D may very well be visible. One solution for this problem would be to calculate (steps 61-73(74)) for each additional view point the z-stack, i.e. using a completely separate rendering pipe for each view point. This however, requires a very substantial computing power. The basis of the invention is that the information on the "hidden" objects, such as object D in the example is, however, present in the 3-or more in general n-layer z-stack 81' for the main viewpoint. Using the z-stack 81' for the main view point enables to keep track of a number of objects that are behind foreground objects. This enables also correct rendering of semi-transparent objects, even if the final image sent to the display shows multiple objects located at the same pixel. In this approach, first all scene objects in the full 3D model are rendered into the z-stack. Then, a single well known process adopted here as Z-trace method extracts from the z-stack the frame or image buffer to be sent to the display. The output image information is constructed per-pixel from the z-stack according to a simple protocol. If all objects are opaque objects, the first layer of the z-stack is just copied. For transparent objects, several layers may be merged.

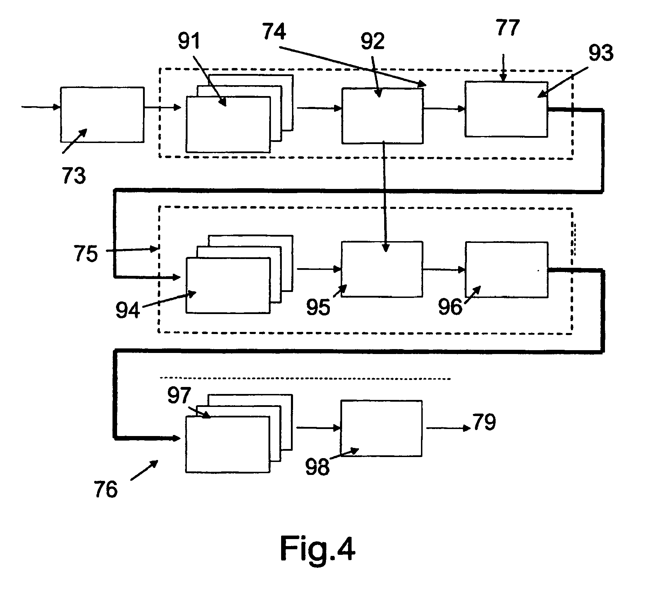

Figure 4 shows an example of the internal structure of the DOF and 3D rendering blocks. Each has an additional buffer-stack, in which the results from the previous stage are stored. Further, both have a new unit adopted as object-extraction unit.

The output of the texture stage (basically the 3-D model) is in a first z-stack constructor rendered in a z-stack 91. This z-stack 91 is made for the main viewpoint. The main view z-stack 91 is used as the starting point for an object extraction 92. An object extraction is a procedure in which from the z-stack 91 those elements that belong to the same objects are extracted. As can be seen in figure 3, an object may be distributed over several layers S1 to S3. The object-extraction unit searches through the stack and reassembles the objects. Reassembling the objects can be done making use of the fact that elements of the same object have characteristics in common, such as the RGB value, the Z-value and/or the opaqueness.

In this example after object extraction the data for the main viewpoint are DOF rendered (93). Without DOF (depth of field) rendering all objects would be imaged with the same sharpness. However, this leads to an unnatural image. In a natural image there is a field of focus in which the image is sharp, objects closer to the viewer or further away are out of focus, and thus blurred. Blurring may e.g. be done by object extraction followed by defocusing the texture and edges of objects, i.e. redistributing the texture spatially within objects and transferring some of the intensity outside the object boundaries, and/or making the outer most parts of the objects semi-transparent. The DOF rendering stage has for that object a blur unit. The result of the DOF unit is again a z-stack 94 comprising the somewhat blurred out-of focus objects and the sharp objects in the plane of focus for the main view point. DOF blurring is in this preferred embodiment performed on the data in the z-stack 91 for the main viewpoint. This is preferred because the computational power needed for DOF blurring is then needed only for the main viewpoint image. Strictly speaking a better performance in respect to the blurring effect of DOF could be obtained when DOF blurring is done for each and every viewpoint. However the DOF for additional viewpoint does not or hardly differs from that for the main viewpoint, so in preferred embodiments DOF is performed on the z-stack 91 for the main view point. The DOF blurred objects are reassembled into a new z-stack 94 for the main view point. This z-stack 94 is an input for an object extractor 95, which extracts the objects. The extracted objects are, for each of the N-remaining view points, shifted in shifter 96 in accordance with the difference in between the main view point and respective the viewpoint. The shifted objects are then reassembled into a new z-stack (in z-stack constructor 97), resulting in N-1 z-stacks. Finally the 3D rendering stage has a z-trace unit (98). Within the frame work of the invention the principal point is that for each of additional view points, on the basis of the z-stack 91 of the main view point, the z-stacks 97 of for additional view points are constructed. Object extraction 95 is optional. However, object extraction is a very useful concept. When the data of the original z-stack 91 for the main view point are converted to construct the z-stack for additional view points, relatively small objects (for instance those objects which are seen under a small angle) may grow substantially in size. When a transformation is done pixel-by-pixel, the objects that have grown in size (for instance from 3 pixels to 10 pixels) necessarily have pixels missing. The missing pixels may e.g. be reconstructed by object extraction and reconstruction, i.e. finding which pixels form a group, detect the presence of a hole (or holes) in the group of pixels, determine as best as possible the values which would fit the elements in the hole(s) (RGB, Z) and fill in the holes and thereby reconstructing the intermediate, missing elements of the group and thereby "repair" the object. This can be done after the shift operation (stage 96). However, then the reconstruction process step has to be repeated N-1 times, namely for each of the z-stacks resulting from shifting step 96, i.e. for each of the z-stacks 96 (for simplicity the results of the various method steps are herein sometimes given the reference numeral belonging to the particular step) for the additional view points. By performing object extraction 95 prior to shifting 96 the objects, object extraction needs to be performed only once namely on the main view point z-stack 94 thereby reducing the complexity of the procedure and increasing the speed.

The number of viewpoints to be calculated and their position/orientation with respect to the main viewpoint may be fixed or, preferably, be dependent on data received from the display. Preferably the system comprises an input (see figure 2) for data on additional view points. The z-stack constructor 75 constructs data for additional view points. It may do so automatically, in which case it could e.g. construct as many z-stacks 95 as there could be views in auto-stereoscopic devices, i.e. a large number covering all display devices possible. This would require a large number of additional view points z-stacks to be constructed. Preferred, however, is that the system comprises an input for supplying data on the additional view points to the additional view point z-stack constructor. Depending on the type of display devices the number of additional view points may vary. By providing an input for providing specific data on the additional view points (number and/or position/orientation with respect to the main view point) the z-stack constructor is able to provide additional view point z-stacks in accordance with the requirements, increasing efficiency. The data on the additional view points, in simple embodiments, could be the number of views to be generated and the maximum viewing angle range.

In second embodiment the system may comprise means to establish the view points corresponding to the users, or means to be supplied with data corresponding to the view points of the users. For instance when more than one player participates in a 3-D game, the use of goggles, head phones, laser guns, badges etc. could enable the system, if such attributes are provided with means for establishing the position of such attributes with respect to the display device, for instance by means of IR or ultrasound sensors, to establish the precise or approximate location of the player with respect to the display screen of the display device. Providing such information to the additional z-stack constructor would enable the view points corresponding with the players to be processed with high accuracy or refreshment rate, while data for other view points are not, or at a lower accuracy or refreshment rate processed. This allows a considerable increase in speed and image quality for those view points that actually matter, i.e. the ones relevant for the players, without requiring an increase in costs.

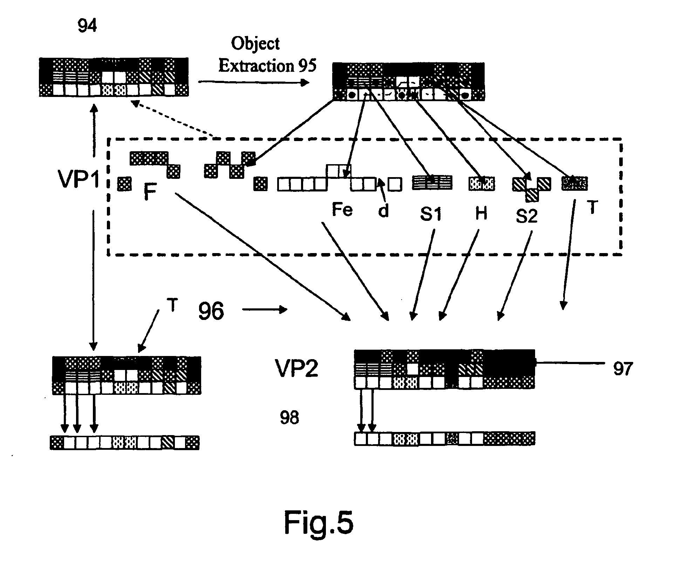

Figure 5 illustrates a method in accordance with a second embodiment. The DOF blurred z-stack 94 for the main viewpoint is fed to an object extractor. In this example the objects are a house H, two sheds S1, S2, a fence Fe, with a hole (for instance a door d which is opened)in it, a large tree T and a forest F. From the z-stack 94 for the main view point (VP1, View Point 1) the objects are extracted in object extraction 95. The objects are shifted (basically the x,y,z values are changed, which can easily be calculated on the basis of the main view point and the relevant additional view point). A new z-stack 97 is calculated on the basis of the new shifted object data. The z-stack 97 is the basis for the image buffer for the additional views (VP2, view point 2). In the original view point (VP1) a part of the forest was visible through the opening d, in the shifted view point (VP2) a part of the tree (T) is visible through the opening in the fence. Thus in this example it is schematically shown that part of the tree T are visible for the additional view through the opening in the fence. The z-stack of VP2 is calculated on the basis of the z-stack for the main view point (VP1) and a simple shifting operation, and thus can be done fast and for many views.

It should be noted that although the second embodiment of the invention allows to generate image for additional views with strongly reduced computational power requirements to generate image for additional views compared to rendering N times a new image, the increase in speed does come at a cost. The z-stack layer comprises a number of layers, in this example 3. If more than three objects are positioned one behind the other, some of the objects will not be present in the z-stack layer, because they are the fourth, fifth etc. object to be seen from the main view point. Thus a loss in data may occur. Preferably the z-stack comprises 2 to 5 layers, most preferably 3 to 4 layers. The more layers there are in the z-stack, the less the chance of a loss of data, however, the higher the computational power required. The inventors have realized that a best compromise may be struck in the indicated range of layers, i.e. 2-5, preferably 3-4, most preferably 3.

A further loss of data may occur when an object (e.g. the side wall of a house) is so oriented that seen from the main view point, it occupies only one or only a small number of pixels. The amount of details one can impart on views from other points of view is then very limited, if at all present.

In the second embodiment the renderer comprises an initial part having an input for the 3-D model and for a number of n main view points for rendering objects in the form of n main view point Z-stacks comprising stack layers comprising color information (RGB) and Z-values, the renderer further comprising a Z-stack constructor in which, from the n main view points Z-stacks generated by the initial stage, Z-stacks for N-n additional viewpoints are constructed, wherein N» n, and a further image information occlusion semantics stage for generating image information from the Z-stacks.

The advantage of having n main viewpoints is that it allows selection of the best main viewpoint to construct an object in an additional viewpoint. The selection is based on which main viewpoint contains the object with the highest detail, that is, represented by the most elements. Also, a combination could be made, e.g. by interpolation of the object's representation in the n main viewpoints. In most current 3D displays, N views are needed with the viewpoints positions being arranged on a horizontal line, allowing a horizontal look-around capability. Then, preferably n=2.

The computational power required for the first stage is doubled, but for the following stage it stays more or less the same. The n=2 main viewpoints can be selected as the extreme left and right viewpoints. In this way, it is ensured that each object is represented in one of the 2 main views with more detail than needed for each additional viewpoint.

Similarly, future 3D displays may provide N=NxNy views arranged in a grid of horizontal and vertical positions to provide a vertical look-around capability. Then, preferably, n=4, with the main viewpoints corresponding to the 4 corners of the grid: top-left, top-right, bottom-left, bottom-right.

A further loss of data may occur due to the finite horizontal and vertical dimensions of the Z-stacks. As objects have different position within each Z-stack, it may happen for some viewpoints that they are no longer present within that Z-stack: they dropped out of sight. It may happen that an object lies just beyond the border of the main viewpoint, disabling its construction in the additional viewpoints. This can be solved by the method described above having n main viewpoints. If an object is not visible in one of the main viewpoints, then it is highly likely visible in one of the other main viewpoints. When n=1 is used, a preferable other solution is to increase the horizontal (and or vertical) dimension of the main Z-stack with Q extra elements, while all additional Z-stacks retain their original dimensions. This ensures that the main Z-stack does contain objects that shift into view only for the additional viewpoints. In this case, the main viewpoint frame buffer also has the original, un-increased size. Possibly a combination is used between the increased dimension solution and the n main viewpoint solution.

A further loss of data may occur due to the resampling of objects from the main viewpoint to the additional viewpoints. This may be solved by having a main viewpoint with increased resolution, e.g. a factor of two more elements in horizontal and/or vertical direction. In this way, the data loss will be negligible. Within the solution with n main viewpoints, it may be possible to extract an object in more resolution from n normal resolution Z-stacks by well known super-resolution techniques. However, current techniques for this do not ensure performance in all situations, e.g. in the degenerate case where the n main viewpoints contain exactly the same information of an object. The resolution increase method ensures performance in all situations.

According to a third embodiment, the renderer according to the second embodiment can be combined with the rendering pipeline of the first embodiment. Both are related to efficiently generate multiple views on a scene. The renderer according to second embodiment requires somewhat less duplication of components in the graphics pipeline than the rendering pipeline according to the first embodiment, but the latter works better when the angle between viewpoints becomes large.

Basically, in the pipeline according to the first embodiment everything is duplicated from the SSR onwards, while in the pipeline according to the second embodiment everything is duplicated from the z-stack onwards.

According to the third embodiment, a preferable combination of the first and second embodiment is to generate only a few reasonably far apart views using the method according to the first embodiment and to generate a few z-stacks according to the method of the second embodiment, which can be used to generate intermediate nearby views.

The loss of data due to the limited number of z-stack layers in the pipeline according to the second embodiment, can be avoided when using the pipeline according to the first embodiment, since basically all views have their own buffer. This buffer need not be a full z-stack, but can be a simple z-buffer if no edge anti-aliasing is required.

A further loss of data may occur due to the resampling of objects from the main viewpoint to the additional viewpoints according to the second embodiment, which can be solved by resampling from the surface to each view directly as being performed according to the first embodiment.

Another possibility of combining the first and second embodiment is to use the renderer according to the second embodiment in place of the warping technique described in the first embodiment.

According to further embodiment, which is based on a combination of the first and second embodiment, the z-stack of the second embodiment is located in the EAA&HSR unit of the first embodiment. In such a system the SSR and parts of EAA&HSR of Fig. 1 are not duplicated. This costs less hardware, but is related to EAA&HSR, which do not have a Z-stack, and might result in less image quality, since an extra resampling step from the z-stack to each view is introduced as compared to the pipeline from Fig 1.

It should be noted that the above-mentioned embodiments illustrate rather than limit the invention, and that those skilled in the art will be able to design many alternative embodiments without departing from the scope of the appended claims. In the claims, any reference signs placed between parentheses shall not be construed as limiting the claim. The word "comprising" does not exclude the presence of elements or steps other than those listed in a claim. The word "a" or "an" preceding an element does not exclude the presence of a plurality of such elements. In the device claim enumerating several means, several of these means can be embodied by one and the same item of hardware. The mere fact that certain measures are recited in mutually different dependent claims does not indicate that a combination of these measures cannot be used to advantage.

Furthermore, any reference signs in the claims shall not be construed as limiting the scope of the claims.

## Claims

1. Computer graphics processor having a renderer for rendering in parallel N, 2D images of a 3D model **characterised by**:
said renderer comprising:
- a rasterizer (SS) for transversing a surface grid over a surface of primitives of said 3D model for all N 2D images,
- a shader unit (PPS) for determining a color of the output of the rasteriser (SS) and forwarding a shaded color sample along with its screen coordinates, and
- N screen space resamplers (SSR) each for resampling the shaded color sample determined by said shader means (PPS) according to one of the N 2D images.

2. Computer graphics processor according to claim 1, further comprising:
- a texture memory (TM) for storing texture maps,
- wherein said surface grid is derived from a texture map being associated with said primitive and being stored in said texture memory (TM).

3. Computer graphics processor according to claim 2, wherein a grid associated to one of the texture maps stored in the texture memory (TM) is chosen as surface grid, if
- said texture map is addressed independently
- said texture map is based on a 2D texture, and
- the texture coordinates at the vertices do not make up a degenerate primitive.

4. Computer graphics processor according to claim 3, wherein
- the texture map with the largest area in texture space is chosen, if more than one texture maps stored in said texture memory (TM) fulfill said three requirements a)-c).

5. Computer graphics processor according to claim 1 or 2, further comprising:
- a means for addressing a display screen,
- said renderer having an input for a 3D model and an input for at least one viewpoint for rendering image information for supplying to the addressing means,
wherein the renderer further comprises an initial part (70) having an input for the 3-D model and for at least one main view point for rendering objects in the form of at least one main view point Z-stack (91, 94) having stack layers (S1, S2, S3) with color information and Z-values,
the renderer further comprising:
- a Z-stack constructor in which, from the at least one main view point Z-stack (91,94) generated by the initial stage, Z-stacks (97) for additional viewpoints are constructed, and a further image information occlusion semantics stage for generating image information (79) from the z-stacks (97).

6. Computer graphics processor according to claim 5, wherein said renderer further comprises:
- an object extracter (95) for extraction of objects from a view point z-stack (91, 94).

7. Computer graphics processor according to claim 6, wherein the object extracter (95) is arranged for extracting objects from the at least one main point view z-stack (91,94).

8. Computer graphics processor according to claim 5, wherein the renderer comprises a DOF rendering stage (92, 93),
- wherein the DOF rendering stage is arranged for DOF processing of the at least one main point view z-stack (91) into a at least one main view point z-stack (94) comprising DOF blurring.

9. Method of rendering N 2D images of a 3D model, **characterised in that** it comprises the steps of:
- transversing a surface grid over a surface of primitives of said 3D model for all N 2D images,
- determining a color of the output of the rasteriser (SS) and forwarding a shaded color sample along with its screen coordinates to a pixel shader (PPS), and
- resampling the shaded color sample determined by said shader means (PPS) for each of the N 2D images.

10. Method of rendering N 2D images of a 3D model according to claim 9, further comprising the steps of:
- storing texture maps a texture memory(TM),
- wherein said surface grid is derived from a texture map being associated with said primitive and being stored in said texture memory (TM).

11. Method of rendering N 2D images of a 3D model according to claim 10, wherein a grid associated to one of the texture maps stored in the texture memory (TM) is chosen as surface grid, if
- said texture map is addressed independently
- said texture map is based on a 2D texture, and
- the texture coordinates at the vertices do not make up a degenerate primitive.

12. Method of rendering N 2D images of a 3D model according to claim 11, wherein
- the texture map with the largest area in texture space is chosen, if more than one texture maps stored in said texture memory (TM) fulfill said three requirements a)-c).

13. Method of rendering N 2D images of a 3D model, according to claim 9, further comprising the steps of:
- supplying data and addressing means of a 3D display device wherein for a main view point objects in the form of at least one main view point Z-stack (94) comprising stack layers (S1, S2, S3) are rendered with RGB and Z-values, and
- construction from the at least one main view point Z-stack (94) z-stacks (97) for additional viewpoints, and
- generating from the Z-stacks (97) for additional viewpoints by means of Z-tracing data (79) to be supplied to the addressing means.

14. Computer program product comprising program code means stored on a computer readable medium for performing a method according to any one of claims 9 to 13, when said program is run on a computer.

## Patentansprüche

1. Computergraphikprozessor mit einer Rendereinrichtung zum parallelen Rendern von N 2D-Bildern eines 3D-Modells, **dadurch gekennzeichnet, dass**:
die Rendereinrichtung umfasst:
eine Rasterungseinrichtung (SS) zum Durchlaufen eines Oberflächengitters auf einer Oberfläche von Primitiven des 3D-Modells für alle N 2D-Bilder,
eine Schattierungseinheit (PPS) zum Bestimmen einer Farbe der Ausgabe der Rasterungseinrichtung (SS) und zum Weiterleiten eines schattierten Farbmusters zusammen mit deren Bildschirmkoordinaten, und
N Bildschirmraum-Neuabtaster (SSR) jeweils zum Neuabtasten des mittels der Schattierungseinrichtung (PPS) bestimmten schattierten Farbmusters gemäß einem der N 2D-Bilder.

2. Computergraphikprozessor nach Anspruch 1, ferner umfassend:
einen Texturspeicher (TM) zum Speichern von Texturabbildern,
wobei das Oberflächengitter aus einem Texturabbild hergeleitet wird, das dem Primitiv zugeordnet ist und im Texturspeicher (TM) gespeichert ist.

3. Computergraphikprozessor nach Anspruch 2, wobei ein Gitter, das einem der im Texturspeicher (TM) gespeicherten Texturabbilder zugeordnet ist, als Oberflächengitter gewählt wird, wenn
das Texturabbild unabhängig adressiert ist,
das Texturabbild auf einer 2D-Textur basiert, und
die Texturkoordinaten an den Eckpunkten kein entartetes Primitiv bilden.

4. Computergraphikprozessor nach Anspruch 3, wobei
das Texturabbild mit der größten Fläche im Texturraum gewählt wird, wenn mehr als eines der im Texturspeicher (TM) gespeicherten Texturabbilder die drei Anforderungen a) - c) erfüllt.

5. Computergraphikprozessor nach Anspruch 1 oder 2, ferner umfassend:
ein Mittel zum Adressieren eines Anzeigebildschirms,
wobei die Rendereinrichtung einen Eingang für ein 3D-Modell und einen Eingang für wenigstens einen Betrachtungspunkt aufweist, um Bildinformationen für die Zuführung zum Adressierungsmittel zu rendern, wobei die Rendereinrichtung ferner einen Anfangsteil (70) mit einem Eingang für das 3D-Modell und für wenigstens einen Hauptbetrachtungspunkt umfasst, um Objekte in der Form wenigstens eines Hauptbetrachtungspunkt-Z-Stapels (91, 94), der Stapelschichten (S1, S2, S3) aufweist, mit Farbinformationen und Z-Werten zu rendern,
wobei die Rendereinrichtung ferner umfasst:
einen Z-Stapel-Ersteller, in welchem aus dem wenigstens einen Hauptbetrachtungspunkt-Z-Stapel (91, 94), der von der Anfangsstufe erzeugt worden ist, Z-Stapel (97) für zusätzliche Betrachtungspunkte erstellt werden, und eine weitere Bildinformationsverdeckung-Semantikstufe zum Erzeugen von Bildinformationen (79) aus den Z-Stapeln (97).

6. Computergraphikprozessor nach Anspruch 5, wobei die Rendereinrichtung ferner umfasst:
einen Objektextrahierer (95) zum Extrahieren von Objekten aus einem Betrachtungspunkt-Z-Stapel (91, 94).

7. Computergraphikprozessor nach Anspruch 6, wobei der Objektextrahierer (95) so ausgeführt ist, dass er Objekte aus dem wenigstens einen Hauptbetrachtungspunkt-Z- Stapel (91, 94) extrahiert.

8. Computergraphikprozessor nach Anspruch 5, wobei die Rendereinrichtung eine DOF-Renderstufe (92, 93) umfasst,
wobei die DOF-Renderstufe so ausgeführt ist, dass sie den wenigstens einen Hauptbetrachtungspunkt -Z-Stapel (91) durch Anwendung einer DOF-Verarbeitung zu wenigstens einem Hauptbetrachtungspunkt-Z-Stapel (94) mit DOF-Unschärfe macht.

9. Verfahren zum Rendern von N 2D-Bildern eines 3D-Modells, **dadurch gekennzeichnet, dass** es die Schritte umfasst:
Durchlaufen eines Oberflächengitters auf einer Oberfläche von Primitiven des 3D-Modells für alle N 2D-Bilder,
Bestimmen einer Farbe der Ausgabe der Rasterungseinrichtung (SS) und Weiterleiten eines schattierten Farbmusters zusammen mit deren Bildschirmkoordinaten zu einem Pixelschattierer (PPS), und
Neuabtasten des schattierten Farbmusters, das von der Schattierungseinrichtung (PPS) bestimmt worden ist, für jedes der N 2D-Bilder.

10. Verfahren zum Rendern von N 2D-Bildern eines 3D-Modells nach Anspruch 9, ferner die Schritte umfassend:
Speichern von Texturabbildern in einem Texturspeicher (TM),
wobei das Oberflächengitter aus einem Texturabbild hergeleitet wird, das dem Primitiv zugeordnet ist und im Texturspeicher (TM) gespeichert ist.

11. Verfahren zum Rendern von N 2D-Bildern eines 3D-Modells nach Anspruch 10, wobei ein Gitter, das einem der im Texturspeicher (TM) gespeicherten Texturabbilder zugeordnet ist, als Oberflächengitter gewählt wird, wenn
das Texturabbild unabhängig adressiert ist,
das Texturabbild auf einer 2D-Textur basiert, und
die Texturkoordinaten an den Eckpunkten kein entartetes Primitiv bilden.

12. Verfahren zum Rendern von N 2D-Bildern eines 3D-Modells nach Anspruch 11, wobei
das Texturabbild mit der größten Fläche im Texturraum gewählt wird, wenn mehr als eines der im Texturspeicher (TM) gespeicherten Texturabbilder die drei Anforderungen a) - c) erfüllt.

13. Verfahren zum Rendern von N 2D-Bildern eines 3D-Modells nach Anspruch 9, ferner die Schritte umfassend:
Zuführen von Daten und Adressierungsmitteln einer 3D-Anzeigevorrichtung, wobei für einen Hauptbetrachtungspunkt Objekte in Form wenigstens eines Hauptbetrachtungspunkt-Z-Stapels (94), der Stapelschichten (S1, S2, S3) umfasst, mit RGB- und Z-Werten gerendert werden, und
Erstellen von Z-Stapeln (97) für zusätzliche Betrachtungspunkte aus dem wenigstens einem Hauptbetrachtungspunkt-Z-Stapel (94), und
Erzeugen zusätzlicher Betrachtungspunkte aus den Z-Stapeln (97) mittels Z-Verfolgungsdaten (79), die den Adressierungsmitteln zuzuführen sind.

14. Computerprogrammprodukt, das Programmcodemittel umfasst, die auf einem computerlesbaren Medium gespeichert sind, um ein Verfahren nach irgendeinem der Ansprüche 9 bis 13 auszuführen, wenn das Programm auf einem Computer ausgeführt wird.

## Revendications

1. Processeur graphique pour ordinateur ayant un dispositif de rendu pour réaliser le rendu en parallèle de N images 2D d'un modèle 3D **caractérisé par le fait que** ledit dispositif de rendu comprend :
- un dispositif pour rastériser (SS) pour traverser une grille de surface sur une surface de primitives dudit modèle 3D pour toutes les images 2D ;
- une unité d'ombrage (PSP) pour déterminer une couleur de la sortie du dispositif pour rastériser (SS) et pour envoyer un échantillon de couleur avec ombrage en même temps que ses coordonnées d'écran, et
- N ré-échantillonneurs dans l'espace d'écran (SSR), chacun d'eux ré-échantillonnant l'échantillon de couleur avec ombrage déterminé par lesdits moyens d'ombrage (PPS) conformément à l'une des N images 2D.

2. Processeur graphique pour ordinateur selon la revendication 1, comprenant en outre :
- une mémoire de textures (TM) pour stocker des cartes de texture,
- dans lequel ladite grille de surface est déduite à partir d'une carte de texture qui est associée à ladite primitive et qui est stockée dans ladite mémoire de textures (TM).

3. Processeur graphique pour ordinateur selon la revendication 2, dans lequel une grille associée à l'une des cartes de texture stockées dans la mémoire de textures (TM) est choisie comme grille de surface si
- ladite carte de texture est adressée de manière indépendante,
- ladite carte de texture est fondée sur une texture 2D, et
- les coordonnées de texture sur les sommets ne constituent pas une primitive dégénérée.

4. Processeur graphique pour ordinateur selon la revendication 3, dans lequel
- on choisit la carte de texture avec la plus grande surface dans l'espace de textures, s'il existe plus d'une carte de texture stockée dans ladite mémoire de textures (TM) qui remplit lesdites trois conditions a)-c).

5. Processeur graphique pour ordinateur selon les revendications 1 ou 2, comprenant en outre :
- des moyens pour adresser un écran d'affichage,
- ledit dispositif de rendu ayant une entrée pour un modèle 3D et une entrée pour au moins un point de vue pour réaliser le rendu des informations d'image afin de les fournir aux moyens d'adressage, dans lequel le dispositif de rendu comporte en outre une partie initiale (70) ayant une entrée pour le modèle 3D et pour au moins un point de vue principal afin d'effectuer le rendu d'objets sous la forme d'au moins une pile Z (91, 94) d'un point de vue principal, ayant des couches de pile (S1, S2, S3) avec des informations de couleur et des valeurs Z,
le dispositif de rendu comportant en outre :
- un constructeur de pile Z dans lequel, à partir de ladite au moins une pile (91,94) d'un point de vue principal générée par l'étape initiale, des piles Z (97) sont construites pour des points de vue supplémentaires (97), et un autre étage de sémantique d'occlusion des informations d'image pour générer des informations d'image (79) à partir des piles Z (97).

6. Processeur graphique pour ordinateur selon la revendication 5, dans lequel le dispositif de rendu comprend en outre :
- un extracteur d'objet (95) pour l'extraction d'objets à partir d'une pile Z de point de vue (91, 94).

7. Processeur graphique pour ordinateur selon la revendication 6, dans lequel l'extracteur d'objet (95) est agencé de manière à extraire des objets à partir d'au moins la pile Z de point de vue principal (91, 94).

8. Processeur graphique pour ordinateur selon la revendication 5, dans lequel le dispositif de rendu comprend un étage de rendu de la profondeur de champ (92, 93),
- dans lequel l'étage de rendu de la profondeur de champ est agencé de manière à traiter la profondeur de champ d'au moins une pile Z de point de vue principal (91) dans au moins une pile Z de point de vue principal (94) comportant un flouté de profondeur de champ.

9. Procédé de rendu de N images 2D d'un modèle 3D, **caractérisé par le fait qu'**il comporte les étapes consistant à :
- traverser une grille de surface sur une surface des primitives dudit modèle 3D pour toutes les N images 2D,
- déterminer une couleur de la sortie du dispositif pour rastériser (SS) et envoyer un échantillon de couleur avec ombrage en même temps que ses coordonnées d'écran à un dispositif d'ombrage de pixel (PPS), et
- ré-échantillonner l'échantillon de couleur avec ombrage déterminé par lesdits moyens d'ombrage (PPS) pour chacune des N images 2D.

10. Procédé de rendu de N images 2D d'un modèle 3D selon la revendication 9, comportant en outre les étapes consistant à :
- stocker les cartes de texture dans une mémoire de textures (TM),
- dans lequel ladite grille de surface est dérivée à partir d'une carte de texture qui est associée à ladite primitive et qui est stockée dans ladite mémoire de textures (TM).

11. Procédé de rendu de N images 2D d'un modèle 3D selon la revendication 10, dans lequel une grille associée à l'une des cartes de texture stockées dans la mémoire de textures (TM) est choisie comme grille de surface, si
- ladite carte de texture est adressée de manière indépendante,
- ladite carte de texture est fondée sur une texture 2D, et
- les coordonnées de texture sur les sommets ne constituent pas une primitive dégénérée.

12. Procédé de rendu de N images 2D d'un modèle 3D selon la revendication 11, dans lequel
- on choisit la carte de texture avec la plus grande surface dans l'espace de textures, s'il existe plus d'une carte de texture stockée dans ladite mémoire de textures (TM) qui remplit les trois conditions a)-c).

13. Procédé de rendu de N images 2D d'un modèle 3D selon la revendication 9, comportant en outre les étapes consistant à :
- fournir des données et des moyens d'adressage d'un dispositif d'affichage 3D, dans lequel est réalisé le rendu des valeurs RGB et Z pour des objets d'un point de vue principal sous la forme d'au moins une pile Z (94) d'un point de vue principal comprenant des couches de pile (S1, S2, S3),
- construire, à partir d'au moins une pile Z de point de vue principal (94), des piles Z (97) pour des points de vue supplémentaires, et
- générer à partir des piles Z (97) pour des points de vue supplémentaires sous forme de données de traçage Z (79) à fournir aux moyens d'adressage.

14. Produit de programme informatique comprenant des moyens de code de programme stockés sur un support pouvant être lu par une machine pour l'exécution d'un procédé selon l'une quelconque des revendications 9 à 13, lorsque ledit programme est exécuté sur un ordinateur.
